# FASCICULE DE BREVET EUROPEEN

(11) **EP 1 983 436 B1**
(45) Date de publication et mention de la délivrance du brevet: **06.10.2010**
(21) Numéro de dépôt: 08154803.4
(22) Date de dépôt: 18.04.2008
(51) Int. Cl.: G06F 11/14

(54) **Contrôle d'intégrité d'une mémoire externe à un processeur**
Kontrolle der Integrität eines prozessorexternen Speichers
Integrity check for a memory external to a processor

(30) Priorité: 20.04.2007 FR 0754591
(43) Date de publication de la demande: 22.10.2008
(73) Titulaire: ST MICROELECTRONICS S.A., 92120 Montrouge (FR)
(72) Inventeur: Bardouillet, Michel, 13790, ROUSSET (FR)
(74) Mandataire: de Beaumont, Michel

(56) Documents cités:
- EP-A- 1 748 374
- DE-A1- 10 251 477
- DE-A1- 19 723 332
- GB-A- 2 367 182
- US-B1- 6 247 151

## Description

### Domaine de l'invention

La présente invention concerne de façon générale les circuits électroniques et, plus particulièrement, les microprocesseurs exploitant une mémoire externe. Par mémoire externe, on entend une mémoire reliée au processeur par des bus de communication accessibles pour une mesure des signaux électriques, par exemple, par un éventuel fraudeur.

L'invention s'applique plus particulièrement à la vérification de l'intégrité (de l'absence de modification entre leur écriture et leur lecture) d'informations contenues dans une mémoire volatile externe pour traitement par un microprocesseur.

### Exposé de l'art antérieur

Une solution pour vérifier l'intégrité du contenu d'une mémoire lue par un microprocesseur est connue sous le nom CRC (Cyclic Redundancy Check) et consiste à mémoriser, avec le contenu d'un bloc dans la mémoire, une valeur représentative de ce contenu. Cette valeur est ensuite vérifiée lors de la lecture pour détecter d'éventuelles erreurs dans le contenu du bloc mémoire. Une telle solution peut être efficace pour détecter des erreurs accidentelles mais n'est pas efficace contre un éventuel piratage. En effet, il suffit au fraudeur de connaître le mode de calcul de la valeur de CRC pour être en mesure de forcer le système avec des données erronées, accompagnées d'une valeur de CRC que le fraudeur aura calculée lui-même et qui sera admise par le système.

Une autre solution consiste à chiffrer l'ensemble du contenu de la mémoire au moyen d'un algorithme de chiffrement exécuté par le microprocesseur. Lors de la lecture, les informations extraites de la mémoire sont alors déchiffrées par le microprocesseur. Une telle solution n'empêche pas l'introduction d'informations erronées, par exemple, lors d'une tentative de fraude par injection de fautes dans l'exécution du programme, car les données ou instructions seront de toute façon déchiffrées par le processeur.

Une troisième solution est basée sur un calcul de signature avec clé (MAC - Message Authentication Code) ou sans clé (fonction de condensat - hash), et consiste à calculer le résultat d'un algorithme cryptographique. La demande de brevet américain n° 2006/0253708 décrit un exemple d'une solution avec clé. Cette solution donne de bons résultats mais requiert de stocker un grand nombre de données (une par ligne de la mémoire) côté microprocesseur. De tels espaces de stockage ne sont pas toujours disponibles.

Le document US-A-6247151 décrit un procédé de vérification d'intégrité de données stockées dans une mémoire, dans lequel deux signatures prenant respectivement en compte une donnée et la copie de cette donnée dans une autre zone mémoire sont calculées.

### Résumé de l'invention

L'invention vise à pallier tout ou partie des inconvénients des procédés et dispositifs connus de contrôle d'intégrité d'une mémoire externe à un microprocesseur.

Un objet vise plus particulièrement une solution économe en espace de stockage côté microprocesseur.

Un autre objet est une solution compatible avec des algorithmes habituels de calcul de code d'authentification (MAC) ou équivalent.

Un autre objet vise une solution adaptée à une mémoire externe de type mémoire vive.

Pour atteindre tout ou partie de ces objets ainsi que d'autres, il est prévu un procédé d'enregistrement d'au moins un bloc d'informations dans une première mémoire volatile externe à un circuit, dans lequel :
une première signature numérique est calculée à partir des informations et d'une donnée interne au circuit ; et
une deuxième signature numérique est calculée à partir des premières signatures d'un groupe de blocs d'informations et d'une quantité numérique interne au circuit et affectée audit groupe.

Selon un mode de mise en oeuvre, la deuxième signature est stockée en interne au microprocesseur.

Selon un mode de mise en oeuvre, la première signature est stockée dans la mémoire externe.

Selon un mode de mise en oeuvre, la quantité numérique change à chaque groupe.

Selon un mode de mise en oeuvre, la deuxième signature n'utilise pas de clé.

Il est également prévu un procédé de vérification du contenu d'au moins un bloc d'informations lues dans une mémoire volatile externe à un circuit, dans lequel :
une première signature mémorisée dans la mémoire externe lors de l'enregistrement dudit bloc est comparée à une première signature courante ; et
une deuxième signature mémorisée en interne au circuit est comparée à une deuxième signature courante, lesdites signatures étant calculées conformément au procédé d'enregistrement.

Selon un mode de mise en oeuvre, une intégrité du bloc de données est validée uniquement en cas d'identité des premières signatures courante et mémorisée, et des deuxièmes signatures courante et mémorisée.

Il est également prévu un contrôleur d'intégrité d'informations stockées dans une mémoire volatile externe à un circuit contenant le contrôleur.

Il est également prévu un microprocesseur comportant des moyens de calcul de signature pour stockage d'un bloc d'informations dans une mémoire volatile externe à ce microprocesseur.

### Brève description des dessins

Ces objets, caractéristiques et avantages, ainsi que d'autres seront exposés en détail dans la description suivante de modes de mise en oeuvre et de réalisation particuliers faite à titre non-limitatif en relation avec les figures jointes parmi lesquelles :
la figure 1 représente une architecture de microprocesseur et de mémoire externe du type auquel s'applique à titre d'exemple la présente invention ;
la figure 2 est un schéma-bloc d'éléments d'un mode de réalisation d'un contrôleur d'intégrité en écriture de données dans une mémoire externe à un microprocesseur ;
la figure 3 illustre des étapes d'un procédé de contrôle d'intégrité lors d'une écriture en mémoire ;
la figure 4 est un schéma-bloc d'un mode de réalisation d'un contrôleur d'intégrité en lecture de données dans une mémoire externe à un microprocesseur ; et
la figure 5 illustre les étapes d'un procédé de contrôle d'intégrité lors d'une lecture de données en mémoire.

De mêmes éléments ont été désignés par de mêmes références aux différentes figures.

### Description détaillée

Pour des raisons de clarté, seuls les étapes et éléments utiles à la compréhension de l'invention ont été représentés aux figures et seront décrits. En particulier, les détails constitutifs du microprocesseur n'ont pas été exposés, l'invention étant compatible avec tout microprocesseur classique. De même, les mécanismes d'adressage et d'exploitation d'informations lues ou écrites dans une mémoire externe par un microprocesseur n'ont pas été détaillés, l'invention étant là encore compatible avec les mécanismes usuels.

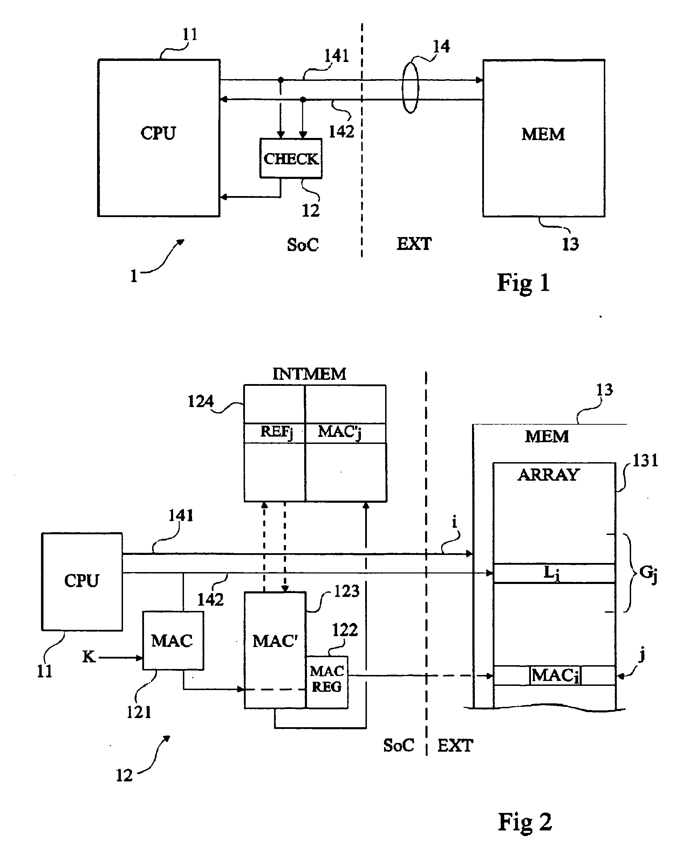

La figure 1 est un schéma-bloc d'une d'architecture du type auquel s'applique à titre d'exemple la présente invention. Un système intégré (SoC - System on Chip), par exemple un microprocesseur 1 comporte, entre autres, une unité centrale de traitement 11 (CPU) et, dans le domaine d'application de l'invention, une fonction 12 (CHECK) de vérification de l'intégrité de données lues par le microprocesseur dans une mémoire 13 (MEM) à l'extérieur (EXT) du circuit 1. L'unité 11 communique avec la mémoire 13 (et avec d'autres éléments non représentés) par plusieurs bus 14 parmi lesquels un bus d'adresse 141, un bus de données 142 et un bus de commande non représenté. La mémoire 13 est de préférence une mémoire vive, dite mémoire de travail, dans laquelle sont stockées des informations permettant au microprocesseur d'exécuter un programme. Il peut s'agir de variables écrites et lues ou d'instructions de programme transitant par la mémoire de travail depuis une mémoire morte (non représentée) pour leur exécution. On considère que l'unité centrale 11 et le contrôleur d'intégrité 12 sont dans une zone sûre ou sécurisée du microprocesseur, c'est-à-dire que les informations transitant dans cette zone (ou restant à l'intérieur de celle-ci) n'ont pas besoin d'être vérifiées du point de vue de leur intégrité. Par contre, on considère la mémoire 13 dans un environnement non sécurisé ou ouvert, ce qui justifie de vérifier que les données qui y sont lues sont bien identiques à celles qui y ont été écrites. En pratique, la mémoire 13 est le plus souvent contenue dans un circuit différent du microprocesseur 1, mais elle peut également être dans le même circuit en étant externe à une zone considérée comme sûre.

Une différence entre les données écrites et lues peut provenir d'une tentative de fraude par un pirate éventuel ou d'un dysfonctionnement accidentel. Dans les deux cas, il est utile que le microprocesseur soit capable de détecter que les données qu'il s'apprête à traiter ne correspondent pas à celles qui ont été stockées antérieurement.

Selon un mode de réalisation, les données contenues dans la mémoire de travail 13 sont, par bloc, associées à un premier code d'authentification ou signature (MAC) de contrôle d'intégrité stocké à l'extérieur du microprocesseur 1 (par exemple, dans la mémoire externe 13). Un deuxième code d'authentification ou de contrôle d'intégrité (MAC'), stocké en interne au microprocesseur, est fonction non pas de la donnée mais des codes d'authentification externes MAC d'un groupe de blocs de la mémoire. On réduit ainsi le besoin de stockage à l'intérieur du microprocesseur sans nuire à la sécurité. Par la suite, on prendra pour exemple une ligne de la mémoire comme granularité, c'est-à-dire que la taille d'un bloc sur lequel est calculée la signature stockée en externe correspond à la taille d'une ligne. Aux figures, les parties internes (sécurisées du système) et externes (non sécurisées) ont été séparées par un pointillé pour mieux illustrer les éléments et étapes impliqués des deux côtés.

La figure 2 illustre un mode de réalisation d'un contrôleur d'intégrité équipant un système intégré (System on Chip - SoC), par exemple un microprocesseur, pour contrôler l'intégrité de données stockées temporairement dans la mémoire externe 13. La figure 2 illustre les éléments impliqués lors d'une écriture d'une ligne de données Li d'adresse i dans le plan mémoire 131 (ARRAY).

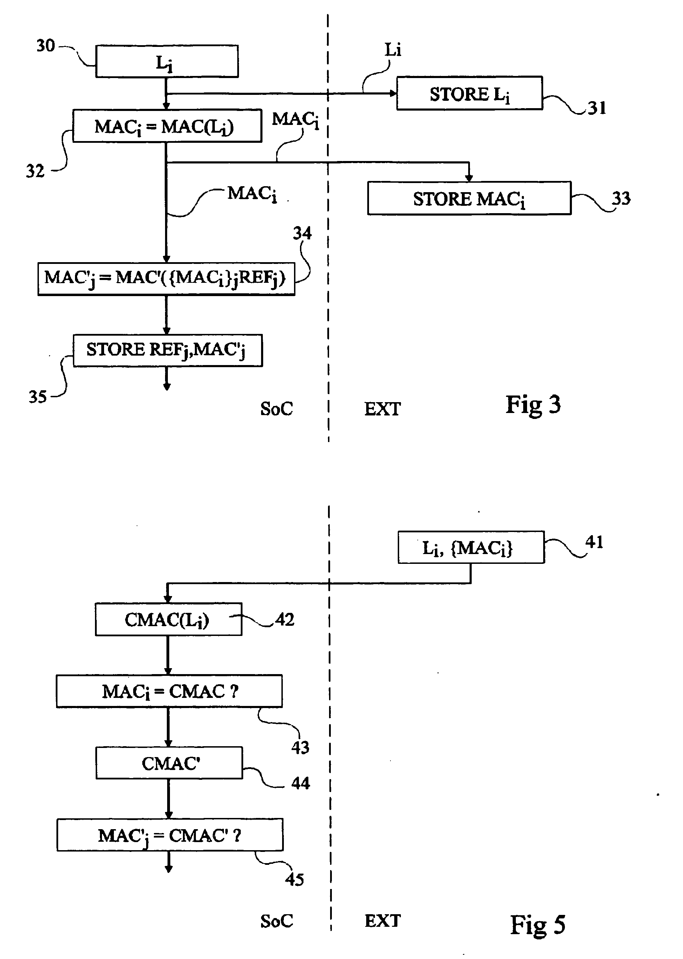

La figure 3 est un organigramme simplifié illustrant le fonctionnement du contrôleur d'intégrité de la figure 2 dans une opération d'écriture.

Le contrôleur d'intégrité 12 comporte une fonction 121 de calcul d'un code d'authentification de messages (MAC) ou plus généralement de tout code d'intégrité de type signature. Ce bloc reçoit, par exemple, une clé K propre au circuit intégré. En variante, il peut s'agir d'une clé de session d'un programme ou plus généralement de tout code connu du circuit 1. Lorsqu'une ligne de donnée Li est fournie par l'unité 11 (bloc 30, figure 3) pour stockage dans la mémoire 13 (bloc 31, STORE Lᵢ), la fonction de calcul 121 est appliquée aux données Li (bloc 32, MACᵢ=MAC(Lᵢ)) à stocker. Pour simplifier, on considère le cas d'une adresse physique i véhiculée par le bus 141, que cette adresse soit fournie directement par l'unité centrale 11 ou qu'il s'agisse d'une adresse virtuelle convertie.

La première signature MACᵢ associée à la ligne de données Li et fournie par la fonction 121 est stockée (bloc 33, STORE MACᵢ) dans une zone du plan mémoire 131 avec toutes les signatures associées à un groupe Gⱼ de lignes de la mémoire. La taille du groupe est conditionnée par la taille d'un bloc (une ligne j) de signatures. Les signatures calculées pour les lignes successives Li du groupe Gⱼ sont stockées temporairement dans un registre 122 (MAC REG) du circuit 12. Si la granularité de l'écriture dans la mémoire est plus fine que celle d'un groupe de signatures, il est toutefois possible d'effectuer les écritures successivement sans attendre le calcul de toutes les signatures du groupe.

En interne au système 1, un mot de référence REFⱼ associé au groupe Gⱼ de lignes est utilisé par un générateur 123 d'une signature (MAC') associée au groupe. Le générateur 123 calcule (bloc 34, MAC'j=MAC'({MACᵢ}, REFⱼ)) une signature d'un groupe de codes d'authentification MACᵢ en y associant la référence REF. Ce calcul n'a pas besoin de prendre en compte de clé secrète dans la mesure où le code MAC' reste en interne au système 1. Le code MAC' est, par exemple, stocké (bloc 35, STORE REFⱼ, MAC'ⱼ) avec la référence REFⱼ utilisée pour son calcul, dans des éléments de mémorisation volatile 124 (INTMEM), internes au microprocesseur (par exemple, une mémoire vive, des registres, etc.). Le mot de référence REFⱼ est, par exemple, un nombre aléatoire tiré à chaque écriture d'une ligne dans la mémoire. En variante, le mot REF est la valeur d'un compteur incrémenté à chaque nouvelle information à stocker.

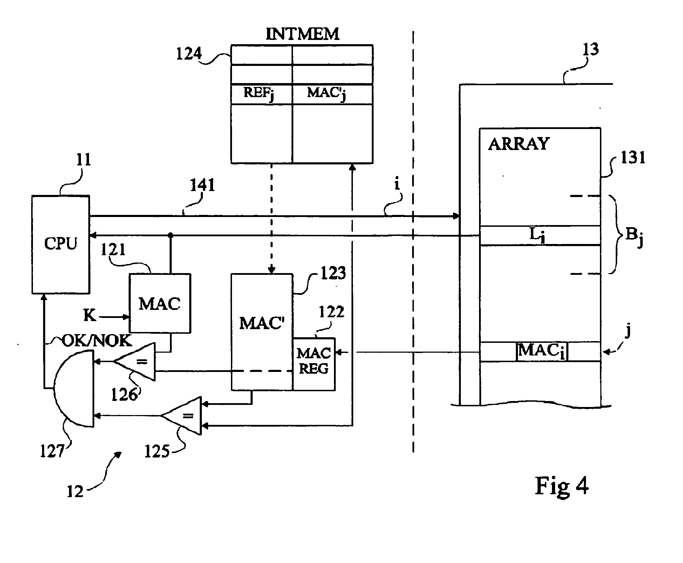

La figure 4 illustre un mode de réalisation d'un contrôleur d'intégrité faisant ressortir les éléments utilisés lors d'une lecture de données dans la mémoire 13 pour contrôler que ces données n'ont pas été modifiées depuis leur stockage.

La figure 5 illustre, par un organigramme simplifié, le fonctionnement du mécanisme de lecture de la figure 4.

Lorsqu'une adresse i d'une ligne de données Li dans la mémoire 13 est fournie par l'unité centrale 11 sur le bus d'adresse 141 (figure 4), la mémoire par l'intermédiaire de son contrôleur fournit (figure 5, bloc 41, Lᵢ, {MACᵢ}) non seulement la ligne de données Li au processeur mais également la ligne j de signatures {MACᵢ} de toutes les lignes Li du groupe Gj. Ces signatures MACᵢ sont stockées dans le registre 122 pour être exploitées par le contrôleur d'intégrité 12. Une première signature courante CMAC de la ligne de données Li est calculée (bloc 42, CMAC(Lⱼ)) par la fonction 121. A partir de la référence du bloc j, identifiable par le contrôleur d'intégrité, la signature MAC'ⱼ du bloc est lue dans la mémoire interne 124 et une signature courante CMAC' est calculée (bloc 44) à partir des premières signatures {MACᵢ} extraites sur la ligne j de la mémoire et du mot de référence REFⱼ. En parallèle ou successivement, la signature CMAC est comparée (bloc 43, MACᵢ=CMAC ?) avec la signature MACᵢ lue sur la ligne j (comparateur 126) et la signature CMAC' est comparée (bloc 45, MAC'ⱼ=CMAC' ?) à la signature MAC'ⱼ (comparateur 125). Le contrôleur d'intégrité fournit un signal de validation (OK/NOK), par exemple, à l'unité centrale 11, dont l'état ne correspond à une validation que si les états fournis par les comparateurs 125 et 126 démontrent tous deux une identité de signatures (par exemple, par une porte logique 127 de type ET). Les suites données par le microprocesseur au signal de validation sont usuelles (par exemple un blocage en cas d'absence de validation et/ou une autorisation de poursuite du programme en cas de validation, etc.).

Un avantage est que la fonction de calcul de la deuxième signature MAC' peut être simple dans la mesure où tous ses éléments restent en interne au système sécurisé.

Cela permet notamment une vérification rapide en lecture dans la mémoire. Un tel mécanisme est en particulier plus rapide que des mécanismes connus sous la dénomination "arbre de Merkel" qui consistent à effectuer des calculs de signatures successives à partir des signatures précédentes. De tels mécanismes requièrent un très grand nombre de calculs.

Un autre avantage du mécanisme proposé est qu'un seul nombre (par exemple aléatoire) est requis par groupe de signatures.

A titre d'exemple particulier de réalisation, la signature MAC' est calculée à partir d'une fonction de diffusion ou de condensat (HASH), par exemple, une combinaison de type OU-Exclusif entre les signatures MACᵢ du groupe j et la référence REFⱼ.

Des modes de réalisation particuliers de la présente invention ont été décrits. Diverses variantes et modifications apparaîtront à l'homme de l'art. En particulier, l'adaptation et le choix des tailles des codes MAC ou MAC' dépend de la taille des données manipulées et de la taille des données stockables dans la mémoire. De plus, le choix de la fonction de calcul à utiliser et de la taille de la signature dépendent de la sécurité souhaitée et, de préférence, des fonctions disponibles côté processeur. En outre, la solution proposée est combinable avec d'autres solutions de contrôle d'intégrité.

## Revendications

1. Procédé d'enregistrement d'au moins un bloc d'informations (Lᵢ) dans une première mémoire volatile (13) externe à un circuit (1), **caractérisé en ce que :**
une première signature numérique (MACᵢ) est calculée à partir des informations et d'une donnée (K) interne au circuit ; et
une deuxième signature numérique (MAC'ⱼ) est calculée à partir des premières signatures d'un groupe de blocs d'informations et d'une quantité numérique (REFⱼ) interne au circuit et affectée audit groupe.

2. Procédé selon la revendication 1, dans lequel la deuxième signature (MAC'ⱼ) est stockée en interne à un microprocesseur.

3. Procédé selon la revendication 1 ou 2, dans lequel la première signature est stockée dans la mémoire externe (13).

4. Procédé selon l'une quelconque des revendications 1 à 3, dans lequel la quantité numérique (REFⱼ) change à chaque groupe.

5. Procédé selon l'une quelconque des revendications 1 à 4, dans lequel la deuxième signature n'utilise pas de clé.

6. Procédé de vérification du contenu d'au moins un bloc d'informations (Lᵢ) lues dans une mémoire volatile externe (13) à un circuit (1), **caractérisé en ce que :**
la première signature (MACᵢ) mémorisée dans la mémoire externe lors de l'enregistrement dudit bloc est comparée à une première signature courante (CMAC) ; et
la deuxième signature (MAC'ⱼ) mémorisée en interne au circuit est comparée à une deuxième signature courante (CMAC), lesdites signatures étant calculées conformément à l'une quelconque des revendications 1 à 5.

7. Procédé selon la revendication 6, dans lequel une intégrité du bloc de données est validée uniquement en cas d'identité des premières signatures courante (CMAC) et mémorisée (MACᵢ), et des deuxièmes signatures courante (CMAC') et mémorisée (MAC'ⱼ).

8. Contrôleur d'intégrité (12) d'informations (Lᵢ) stockées dans une mémoire volatile (13) externe à un circuit (1) contenant le contrôleur, **caractérisé en ce qu'**il comporte des moyens pour mettre en oeuvre le procédé selon l'une quelconque des revendications 1 à 7.

9. Microprocesseur (1) comportant des moyens de calcul de signature pour stockage d'un bloc d'informations (Lᵢ) dans une mémoire volatile (13) externe à ce microprocesseur (1), **caractérisé en ce qu'**il comporte des moyens pour la mise en oeuvre du procédé selon l'une quelconque des revendications 1 à 7.

## Claims

1. A method for recording at least one information block (Lᵢ) in a first volatile memory (13) external to a circuit (1), **characterized in that**:
a first digital signature (MACᵢ) is calculated based on information and data (K) internal to the circuit; and
a second digital signature (MAC'ⱼ) is calculated based on the first signatures of a group of information blocks and on a digital quantity (REFⱼ) internal to the circuit and assigned to said group.

2. The method of claim 1, wherein the second signature (MAC'ⱼ) is stored internally to a microprocessor.

3. The method of claim 1 or 2, wherein the first signature is stored in the external memory (13).

4. The method of any of claims 1 to 3, wherein the digital quantity (REFⱼ) changes for each group.

5. The method of any of claims 1 to 4, wherein the second signature uses no key.

6. A method for checking the content of at least one block of information (Lᵢ) read from a volatile memory (13) external to a circuit (1), **characterized in that**:
the first signature (MACᵢ) stored in the external memory on recording of said block is compared with a first current signature (CMAC); and
the second signature (MAC'ⱼ) stored internally to the circuit is compared with a second current signature (CMAC), said signatures being calculated according to any of claims 1 to 5.

7. The method of claim 6, wherein an integrity of the data block is validated only in case of an identity of the first current (CMAC) and stored (MACᵢ) signatures, and of the second current (CMAC') and stored (MAC'ⱼ) signatures.

8. A controller (12) of the integrity of information (Lᵢ) stored in a volatile memory (13) external to a circuit (1) containing the controller, comprising means for implementing the method of any of claims 1 to 7.

9. A microprocessor (1) comprising signature calculation means for the storage of an information block (Lᵢ) in a volatile memory (13) external to this microprocessor (1), comprising means for implementing the method of any of claims 1 to 7.

## Patentansprüche

1. Verfahren zum Aufzeichnen wenigstens eines Informationsblocks (Lᵢ) in einem ersten flüchtigen Speicher (13), der außerhalb eines Schaltkreises (1) liegt, **dadurch gekennzeichnet, dass:**
eine erste digitale Signatur (MACᵢ) auf der Basis von Information und Daten (K) im Schaltkreis berechnet wird; und
eine zweite digitale Signatur (MAC'ⱼ) auf der Basis der ersten Signaturen einer Gruppe von Informationsblöcken und auf einer digitalen Größe (REFⱼ) im Schaltkreis berechnet und der Gruppe zugeordnet wird.

2. Verfahren nach Anspruch 1, wobei die zweite Signatur (MAC'ⱼ) in einem Mikroprozessor gespeichert wird.

3. Verfahren nach Anspruch 1 oder 2, wobei die erste Signatur in dem externen Speicher (13) gespeichert wird.

4. Verfahren nach einem der Ansprüche 1 bis 3, wobei sich die digitale Größe (REFⱼ) für jede Gruppe ändert.

5. Verfahren nach einem der Ansprüche 1 bis 4, wobei die zweite Signatur keinen Schlüssel verwendet.

6. Verfahren zum Überprüfen des Inhalts von wenigstens einem Informationsblock (Lᵢ), der von einem flüchtigen Speicher (13) gelesen wird, der außerhalb eines Schaltkreises (1) liegt, **dadurch gekennzeichnet, dass:**
die erste Signatur (MACᵢ), die während der Aufzeichnung des Blocks im externen Speicher gespeichert wird, mit einer ersten aktuellen Signatur (CMAC) verglichen wird; und
die zweite Signatur (MAC'ⱼ), die im Schaltkreis gespeichert wird, mit einer zweiten aktuellen Signatur (CMAC) verglichen wird, wobei die Signaturen nach einem der Ansprüche 1 bis 5 berechnet werden.

7. Verfahren nach Anspruch 6, wobei die Integrität des Datenblocks nur im Fall einer Gleichheit der ersten aktuellen (CMAC) und der gespeicherten (MACⱼ) Signatur und der zweiten aktuellen (CMAC') und der gespeicherten (MAC'ⱼ) Signatur validiert wird.

8. Controller (12) für die Integrität einer Information (Lᵢ), die in einem nicht-flüchtigen Speicher (13), außerhalb eines Schaltkreises (1), der den Controller aufweist, gespeichert ist, wobei der Controller Mittel zum Implementieren des Verfahrens nach einem der Ansprüche 1 bis 7 aufweist.

9. Mikroprozessor (1), **dadurch gekennzeichnet, dass** er Signaturberechnungsmittel zum Speichern eines Informationsblocks (Lᵢ) in einem flüchtigen Speicher (13) aufweist, der außerhalb des Mikroprozessors (1) liegt, welcher ferner Mittel zum Implementieren des Verfahrens nach einem der Ansprüche 1 bis 7 aufweist.
